# EUROPÄISCHE PATENTSCHRIFT

(11) **EP 1 985 591 B1**
(45) Veröffentlichungstag und Bekanntmachung des Hinweises auf die Patenterteilung: **27.06.2012**
(21) Anmeldenummer: 08154926.3
(22) Anmeldetag: 22.04.2008
(51) Int. Cl.: C03C 1/10, C03C 3/085, C03C 4/02, C03C 10/00, C03C 14/00

(54) **Metallkolloidgefärbte Glaskeramik und in eine metallkolloidgefärbte Glaskeramik umwandelbares farbloses Glas**
Metal colloid-coloured glass ceramic and non-coloured glass which can be converted into a metal colloid coloured glass ceramic
Vitrocéramique colorée au colloïde de métal et un verre incolore transformable en vitrocéramique colorée au colloïde de métal

(30) Priorität: 24.04.2007 DE 102007020246
(43) Veröffentlichungstag der Anmeldung: 29.10.2008
(73) Patentinhaber: Schott AG, 55122 Mainz (DE)
(72) Erfinder: Schneider, Meike, 65232 Taunusstein (DE); Zachau, Thilo, 68642 Bürstadt-Riedrode (DE); Siebers, Friedrich, 55283 Nierstein (DE); Schmidbauer, Wolfgang, 55126 Mainz-Finthen (DE)
(74) Vertreter: Mehler Achler

(56) Entgegenhaltungen:
- EP-A- 1 465 460
- WO-A1-2008/065167
- KR-B1- 920 007 014
- KR-B1- 920 007 014
- US-A- 3 781 523
- US-A- 3 839 055
- SASAI J ET AL: "Crystallization effect on non-linear optical response of silicate glass and glass-ceramics containing gold nanoparticles" JOURNAL OF NON-CRYSTALLINE SOLIDS, NORTH-HOLLAND PHYSICS PUBLISHING. AMSTERDAM, NL, Bd. 290, Nr. 1, 1. September 2001 (2001-09-01), Seiten 49-56, XP004300718 ISSN: 0022-3093

## Beschreibung

Metallkolloidgefärbte Gläser sind als so genannte Goldrubingläser seit dem 17. Jahrhundert bekannt. Auch der Einsatz von Kupfer ("Kupferrubin") für diesen Zweck ist bekannt. Die Erzeugung von Silberkolloiden in der Glasoberfläche ist z.B. zur Herstellung von Gradierungen und Skalen auf Messzylindern und Bechergläsern bekannt. Zu diesem Zweck wird eine so genannte Silberbeize, d.h. eine Paste aus einem Silbersalz, Trägerstoffen wie Kaolin, Ocker oder Ton sowie einer Schwefelverbindung auf die Glasoberfläche aufgebracht, anschließend werden die Silberionen in einer Festkörperreaktion unter reduzierenden Bedingungen in die Oberfläche eindiffundiert und bilden dort das gefärbte Silberkolloid.

Hinsichtlich metallkolloidgefärbter Glaskeramik gibt es in der Literatur unterschiedliche Aussagen. Gemäß GB 863 569 oder GB 1 398 315 wirken die Metallkolloide als Keimbilder bei der Keramisierung des Glases zur Glaskeramik, eine Färbung der Glaskeramik durch die Metallkolloide findet nicht statt. In JP 2003-183047 A wird ein durch Metallkolloide rot gefärbtes Glas beschrieben , das in eine rotgefärbte Glaskeramik umgewandelt wird. Die Autoren beschreiben , dass es schwierig ist, die rote Farbe bei der Umwandlung des Glases in Glaskeramik in dem gewünschten Farbton beizubehalten. Es wird daher eine spezielle Glaszusammensetzung vorgeschlagen, die wenigstens ein Oxid eines zweiwertigen Metalls und Bi₂O₃ enthält. Ein solches gefärbtes Glas lässt sich unter Beibehaltung des Farbtons in eine Glaskeramik überführen. Gemäß KR 920007014 B lässt sich eine rotgefärbte Glaskeramik für den Bausektor aus einem Glas herstellen, für dessen Herstellung neben 10 - 20 Gew.-% CaO, 0,1 - 2,5 Gew.-% S₇C₁₂, 1,5 - 2,5 Gew.-% C und 0,1 - 2,5 Gew.-% CuO verwendet werden. Gemäß US 3,839,055 wird eine zerspanbare Fluorglimmer-Glaskeramik, die als Hauptkristallphase Tetrasiliciumfluorglimmer enthält, beschrieben. Der Glasmasse können bei ihrer Herstellung die üblichen bekannten färbenden Verbindungen der Übergangsmetalle, der seltenen Erden, aber auch kolloidale Glasfärbemittel wie elementares Gold zugesetzt werden. Färbt man das Glas erst kurz vor dem Guss, kann man aus dem Farbschlieren enthaltenden Glas durch Keramisieren einen künstlichen "Marmor" erzeugen, der im Gegensatz zu dem natürlichen Marmor bruchfester ist und eine bedeutend bessere Säurefestigkeit besitzt. Sasai et al. "Crystallization effect on non-linear optical response of silicate glasses and glass-ceramics containing gold nonoparticles", J. non Cryst. Solids 290 (2001) 49 - 56, untersucht in einem Modell-Silikatglas Relaxationszeiten für das nicht-lineare optische Verhalten von Gold-Nanopartikeln. Das Ausgangsglas ist bereits vor der Keramisierung gefärbt. EP 1 465 460 A beschreibt eine Oberplatte für Kocher, die aus einem ionengefärbten Farbglas erzeugt wurde, das unter bestimmten Redox-Bedingungen erschmolzen wurde. US 3,781,523 beschreibt ein Kochgerät, das mit einer Wärmeverteilplatte versehen ist, die mit einem thermochromen kristallisierten Email überzogen ist, wobei die thermochrome Färbung durch Cadmiumchalkogenid-Kristalloide hervorgerufen wird.

Nachteilig bei der Herstellung gefärbter Glaskeramiken aus gefärbten Gläsern ist die Verunreinigung der Glaswanne durch die Färbemittel, wodurch sich sehr lange Umfärbezeiten bei Übergang auf einen anderen Farbton ergeben sowie der Umstand, dass in derselben Glaswanne kein ungefärbtes Glas bzw. keine ungefärbte Glaskeramik erzeugt werden kann.

Der Erfindung liegt daher die Aufgabe zugrunde die Bedingungen zu finden und anzugeben, die es ermöglichen, zuverlässig ein Kolloidbildner-haltiges farbloses Vorläuferglas zu erzeugen, das durch geeignete Wahl der Temperaturbehandlung in eine transparent farblose Glaskeramik oder durch eine andere Temperaturbehandlung in eine metallkolloidgefärbte Glaskeramik überführt werden kann, wobei die Färbung der Glaskeramik erst während der der Keramisierung dienenden Temperaturbehandlung auftritt.

Diese Aufgabe wird durch das in Anspruch 1 beschriebene, zur Umwandlung in eine farblos transparente oder kolloidgefärbte Glaskeramik geeignete Glas sowie die Glaskeramik nach Anspruch 4 gelöst.

Durch die aufeinander abgestimmte Kombination eines Metallkolloidbildners mit einem geeigneten Redox-Partner erlaubt die Erfindung die Herstellung eines nicht gefärbten Glases sowie die Herstellung einer transparent farblosen Glaskeramik und einer metallkolloidgefärbten transluzenten oder opaken Glaskeramik aus diesem Ausgangsglas.

Als Metallkolloidbildner kommen Verbindungen der Metalle Au, Ag, As, Bi, Nb, Cu, Fe, Pd, Pt, Sb und Sn infrage, während der Redox-Partner aus Verbindungen der Gruppe As, Sb, Sn, Ce, Fe, W und Mn stammt.

Die Menge der Metallkolloidbildner und der Redox-Partner (jeweils gerechnet als Oxid) wird so gewählt, dass die Kolloidbildung erst während des Keramisierungsprozesses erfolgt und nicht während des Formgebungs- und Kühlungsprozesses des Glases.

Für die Metalle Au, Ag, Pt, Pd soll die Menge im Glas (gerechnet als Oxid) kleiner als 0,6 Gew.-%, bevorzugt kleiner als 0,4 Gew.-% sein. Die Mindestmenge, mit der sich noch eine ausreichende Färbung erreichen lässt beträgt 0,005 Gew.-% dieser Kolloidbildner.

Für Cu und Fe beträgt die Höchstmenge jeweils und insgesamt 1,2 Gew.-%, bevorzugt 1,0 Gew.-%, insbesondere weniger als 0,8 Gew.-%. Als Mindestmenge kommt für diese Kolloidbildner 0,1 Gew.-%, insbesondere 0,2 Gew.-% zur Anwendung.

As und Sb sind in Bezug auf eine Einfärbung des Grundglases nicht kritisch. Zur Erzielung einer Kolloidfärbung reicht in der Regel ein Gehalt von 3,0 Gew.-%. Ein höherer Gehalt von bis zu 6,0 Gew.-% ist durchaus ohne Störung einsetzbar, eine Überschreitung sollte aber aufgrund der Toxizität der beiden Metalle bzw. ihrer Verbindungen vermieden werden. Ein Gehalt von 0,1 Gew.-%, insbesondere von 0,25 Gew.-% As oder Sb sollte zur Erzielung einer ausreichenden Färbung nicht unterschritten werden, wenn diese Metalle als Kolloidbildner eingesetzt werden.

Wismut färbt bei einem Gehalt ab etwa 5,0 Gew.-% das Ausgangsglas rötlich. Ein Wismutgehalt von 5,0 Gew.-%, bevorzugt von 4,0 Gew.-%, insbesondere von 3,5 Gew.-% sollte daher nicht überschritten werden. Als Mindestgehalt hat sich ein Gehalt von 0,1 Gew.-%, insbesondere von 0,15 Gew.-% als geeignet erwiesen.

Der Niobgehalt sollte zwischen 0,1 Gew.-% und 6,0 Gew.-%, insbesondere zwischen 0,25 Gew.-% und 5,0 Gew.-% liegen.

Zinn führt nicht zu einer Einfärbung des Grundglases, fördert aber die Entglasungsneigung, was bei zu hohen Anteilen zu Problemen bei der Verarbeitung bzw. Herstellung der Glaskeramik führen kann. Der Zinngehalt soll daher so niedrig gewählt werden, dass die obere Entglasungstemperatur des Glases unterhalb von 1450 °C, bevorzugt unterhalb 1400 °C, insbesondere unterhalb 1350 °C liegt. Bei den technisch in größtem Umfang hergestellten Lithium-Alumo-Silikatglaskeramiken sollte daher der Zinngehalt vorzugsweise kleiner als 1,9 Gew.-%, bevorzugt kleiner als 1,7 Gew.-% sein. Um eine ausreichende Färbung der Glaskeramik zu gewährleisten, sollte die Mindestmenge an Sn, unabhängig vom Typ der Glaskeramik, 0,1 Gew.-% betragen, wenn Zinn als einziger Kolloidbildner eingesetzt wird.

Die Gesamtmenge an Metallkolloidbildnern soll so gehalten werden, dass eine Färbung des Grundglases nicht auftritt. Das wird im allgemeinen durch einen Höchstgehalt von 8 Gew.-% erreicht.

Der Redox-Partner hat die Aufgabe zu erfüllen, durch die Bereitstellung von Elektronen eine Reduktion des Kolloidbildners zum metallischen Zustand und damit die Kolloidbildung zu ermöglichen.

Als Redox-Partner geeignet sind insbesondere die Oxide von As, Sb, Sn, Ce, Fe, W und Mn.

Je nach der Kombination von Metallkolloidbildner und Redox-Partner kann ein Element beide Rollen einnehmen. Ein Beispiel dafür ist Zinn, das z.B. als Redox-Partner die Bildung von Bi-, Au-, As- und Sb-Kolloiden unterstützt, in höheren Konzentrationen mit z.B. As oder Sb als Redox-Parfner jedoch als Metallkolloidbildner wirkt.

Die Redox-Partner sind in der Regel in Mengen von 0,05 Gew.-% bis 6,0 Gew.-% in der Glasschmelze enthalten. Dabei sind für die einzelnen Redox-Partner die bevorzugten Gehalte (bezogen auf die Oxide) wie folgt:
As 0,1 Gew.-% bis zu 6,0 Gew.-%, bevorzugt 0,25 Gew.-% bis 3,0 Gew.-%
Sb 0,1 Gew.-% bis zu 6,0 Gew.-%, bevorzugt 0,25 Gew.-% bis 3,0 Gew.-%
Sn 0,1 Gew.-% bis <1,9 Gew.-%, bevorzugt 0,2 Gew.-% bis 1,8 Gew.-%
Ce 0,05 Gew.-% bis 3,0 Gew.-%, bevorzugt 0,1 Gew.-% bis 2,0 Gew.-%
Fe 0,1 Gew.-% bis 2,0 Gew.-%, bevorzugt 0,1 Gew.-% bis 1,0 Gew.-%
W 0,1 Gew.-% bis 4,0 Gew.-%, bevorzugt 0,1 Gew.-% bis 3,0 Gew.-%
Mn 0,05 Gew.-% bis 3,0 Gew.-%, bevorzugt 0,1 Gew.-% bis 2,0 Gew.-%

Werden in einer Glasschmelze mehr als ein Redox-Partner eingesetzt, dann sollte ein Minimalgehalt von 0,1 Gew.-% in der Summe, bei Kombination mit Ce oder Mn 0,05 Gew.-% in der Summe nicht unterschritten werden. Der Maximalgehalt von 8,0 Gew.-% sollte nicht überschritten werden.

Einige der aufgeführten Elemente können sowohl als Metallkolloidbildner als auch als Redox-Partner wirken. Es leuchtet allerdings ein, dass in einer Kombination Metallkolloidbildner und Redox-Partner nicht identisch sein dürfen, sondern dass in einer Kombination Metallkolloidbildner und Redox-Partner aus verschiedenen Elementen bestehen müssen.

Bevorzugte Kombinationen von Metallkolloidbildnern und Redox-Partnern sind folgende:
Sn - As
Sn - Sb
Sn - Ce
Bi - Sn
Bi - As
Bi - Sb
Au - Sn
Ag - Sn
Cu - Sn
Cu - Fe
Cu - Ce

Vorteilhaft kann auch die Kombination mehrerer Metallkolloidbildner und/oder Redox-Partner sein. Als besonders geeignet hat sich z.B. eine Kombination von Bi, Sn und As erwiesen.

Besonders universell einsetzbare Redox-Partner sind Sn, As und Sb die mit fast allen Metallkolloidbildnern kombinierbar sind. Falls As, Sb, Sn oder Ce als Redox-Partner eingesetzt werden, wirken diese ebenfalls als Läutermittel.

Die Wirkung der Redox-Partner auf die Metalloxidpartner kann durch in der Glaserzeugung an sich bekannte Maßnahmen zur Einstellung des Oxidationspotentials in der Schmelze, z.B. oxidierende oder reduzierende Schmelzatmosphäre, Einsatz von Formiergas (Gemisch aus N₂ mit bis zu 10 Vol% H₂) oder Sauerstoff in der Schmelze, Zugabe von Zucker oder anderen Reduktionsmitteln zum Gemenge, Einsatz von oxidierenden Verbindungen, z.B. Nitrat im Gemenge, modifiziert werden. Auf das Vorhandensein eines der genannten Redox-Partner kann jedoch nicht verzichtet werden.

Bei der Umwandlung in eine farblos transparente Glaskeramik kann durch die beginnende Kolloidbildung eine verbesserte Keimbildung erreicht werden, da die Kolloide selbst als Keime dienen können. Dies ermöglicht bei geeigneter Wahl des Keramisierungsprogramms (Temperaturen unterhalb der Ausbildung der eigentlichen Kolloidfärbung) die Herstellung eines besonders farbneutralen und transparenten Materials.

Nicht jeder Metallkolloidbildner harmoniert optimal mit jedem Redox-Partner. Es ist daher im Einzelfall vorab zu prüfen, ob mit der gewählten Metallkolloidbildner-/Redox-Partner-Kombination der gewünschte Farbeffekt bei Umwandlung in eine gefärbte Glaskeramik bzw. die gewünschte Transparenz bei Umwandlung in eine farblos transparente Glaskeramik erreicht werden kann.

Derartige, für eine Produktion in technischem Maßstab immer erforderliche Vorversuche können aber von jedem Fachmann anhand der Lehre dieser Erfindung ohne Schwierigkeiten durchgeführt werden.

Als Basis für die Herstellung der metallkolloidgefärbten Glaskeramiken können alle bekannten Glaskeramiksysteme verwendet werden. Besonders vorteilhaft lässt sich die Erfindung bei der Verwendung von Grundgläsem aus dem Lithium-Alumosilikat-System oder dem Magnesium-Alumosilikat-System umsetzen.

Lithium-Alumosilikat-Gläser, die in Glaskeramik umgewandelt werden können, sind dem Fachmann in großer Anzahl bekannt. Sie enthalten in der Regel als Hauptbestandteile 55 bis 75 Gew.-% SiO₂, 10 bis 30 Gew.-% Al₂O₃, 1,5 bis 5 Gew.-% Li₂O, 0,2 bis 10 Gew.-% TiO₂ und/oder ZrO₂, sowie ggfls. weitere Oxide wie Erdalkalioxide, Alkalioxide, Boroxid, Phosphoroxid, ZnO und dergleichen.

Für die Erfindung geeignet sind Lithium-Alumosilikatgläser bzw. die daraus umgewandelte Glaskeramik, die (in Gew.-% auf Oxidbasis) enthält: 55,0 bis 75,0, insbesondere 65,0 bis 70,0 SiO₂, 18,0 bis 26,0, insbesondere 18,0 bis 23,0 Al₂O₃, 1,5 bis 5,0, insbesondere 3,4 bis 4,2 Li₂O, 0 bis 3,0, insbesondere 0,8 bis 2,5 ZnO, ferner 0 bis 2,5, insbesondere 0 bis 2,0 MgO, 0 bis 2,5, insbesondere 0 bis 2,0 CaO, 0 bis 2,5, insbesondere 0 bis 2,0 SrO, 0 bis 1,5, insbesondere 0 bis 0,8 Na₂O, 0 bis 1,5, insbesondere 0 bis 0,8 K₂O, 0 bis 4,0, insbesondere 0,5 bis 3,0 TiO₂, 0,5 bis 2,7 ZrO₂, 0 bis 8,0, insbesondere 0 bis 3,0 P₂O₅. Die niedrige Untergrenze für den Gehalt der Keimbildner TiO₂ und ZrO₂ kann dadurch ermöglicht werden, dass die Metallkolloidbildner gleichzeitig auch als Keimbildner bei der Keramisierung wirken können.

Magnesium-Alumosilikat-Glaskeramiken sowie ihre entsprechenden Vorläufergläser sind ebenfalls zahlreich bekannt und enthalten in der Regel als Hauptbestandteile 35 bis 65 Gew.-% SiO₂, 15 bis 45 Gew.-% Al₂O₃, 2 bis 20 Gew.-% MgO, 0 bis 15 Gew.-% ZnO sowie weitere Oxide, wie bei der Lithium-Alumosilikat-Glaskeramik beschrieben. Auch hier können TiO₂ und/oder ZrO₂ als Keimbilder eingesetzt werden.

Besonders geeignete Magnesium-Alumosilikat-Glaskeramiken sowie ihre entsprechenden Vorläufergläser enthalten (in Gew.-% auf Oxidbasis) 35,0 bis 65,0, insbesondere 45,0 bis 62,0 SiO₂, 15,0 bis 40,0, insbesondere 15,0 bis 25,0 Al₂O₃, 2,0 bis 20,0, insbesondere 2,0 bis 10,0 MgO, 0 bis 15,0, insbesondere 2,0 bis 15,0 ZnO, 0 bis 10,0, insbesondere 0 bis 3,0 BaO, 0 bis 10,0, insbesondere 0 bis 3,0 SrO, 0 bis 10,0, insbesondere 0,5 bis 8,0 TiO₂, 0,5 bis 10,0, insbesondere 0,5 bis 4,0 ZrO₂, 0 bis 10,0, insbesondere 0 bis 5,0 P₂O₅, 0 bis 10,0, insbesondere 0 bis 5,0 B₂O₃. Auch hier kann der niedrige Keimbildnergehalt durch die Wirkung der Metallkolloidbildner ermöglicht werden.

Die Umwandlung der Grundgläser in Glaskeramik ist bekannt und in zahlreichen Artikeln und Patentschriften beschrieben. Nach der Erzeugung und Formung des Vorläuferglases wird dieses durch eine in der Regel zweistufige Wärmebehandlung in Glaskeramik umgewandelt. Zunächst wird das Glas auf eine Temperatur nahe oder entsprechend der maximalen Keimbildungsgeschwindigkeit erhitzt. Dieser Schritt dient der Keimbildung, wobei die Keimdichte durch die Temperatur und die Haltezeit bei dieser Temperatur bestimmt wird. Anschließend wird die Temperatur auf die Kristallisationstemperatur erhöht und dort nach Bedarf gehalten.

Die Temperatur der maximalen Keimbildungsgeschwindigkeit liegt üblicherweise 20 bis 80 °C oberhalb der Glastransformationstemperatur. Die Temperatur der maximalen Kristallwachstumsgeschwindigkeit, an der sich die Kristallisationstemperatur orientiert, lässt sich durch eine Differentialthermoanalyse (DTA) bestimmen. Durch die geeignete Wahl der Kristallisationstemperatur können in der Glaskeramik unterschiedliche Kristallphasen (z.B. Hochquarz-Mischkristalle oder β-Spodumen-Mischkristalle in Lithium-Alumosilikat-Glaskeramiken) erzeugt werden, die die Eigenschaften der Glaskeramik maßgeblich beeinflussen. Diese Zusammenhänge sind der Fachwelt wohlbekannt.

Zur Herstellung von transparent farblosen Glaskeramiken und metallkolloidgefärbten Glaskeramiken aus einem erfindungsgemäßen Ausgangsglas muss für beide Varianten ein optimiertes Keramisierungsprogramm bestimmt werden. Dabei kann in der Regel dieselbe Keimbildungstemperatur und -zeit für beide Varianten verwendet werden. Für die Kristallisation der transparenten Variante wird eine maximale Keramisierungstemperatur T₁ verwendet, die unterhalb der Keramisierungstemperatur T₂ für die gefärbte Variante liegt. Um beide Temperaturen zu bestimmen, eignet sich folgende Vorgehensweise: Ein länglicher Stab aus dem Ausgangsglas ("Gradientenstab") wird bei der Temperatur der maximalen Keimbildungsgeschwindigkeit eine ausreichend lange Zeit gehalten, um einen guten Vorkeimzustand zu erzeugen. Besonders für die transparente Keramisierung ist eine hohe Keimdichte von Wichtigkeit. Je nach Glaszusammensetzung liegt diese Keimbildungszeit zwischen wenigen Minuten und einigen Tagen. Anschließend wird der Stab in einem Temperaturgradientenofen keramisiert. Der Temperaturgradient sollte dabei mindestens den Bereich zwischen Keimbildungstemperatur und der Temperatur des höchsten Kristallisationspeaks des Glases (bestimmt aus einer DTA-Messung) abdecken. Anhand des Gradientenstabes lässt sich dann die Temperatur Tₓ bestimmen, bei der die Kolloidfärbung auftritt. Zur Herstellung einer transparenten Glaskeramik wird dann die Keramisierungstemperatur T₁<Tₓ gewählt, so dass die gewünschte Kristallphase erzeugt wird (im Allgemeinen in einem Bereich von 50-100°C um den entsprechenden Kristallisationspeak). Zur Herstellung der gefärbten Variante wird dagegen eine Keramisierungstemperatur T₂>Tₓ verwendet.

Die Temperatur Tₓ in der Regel liegt im Bereich zwischen der Keimbildungstemperatur und dem höchsten Kristallisationspeak des Glases. Sie lässt sich durch die Wahl der Keimbildungszeit beeinflussen: So führt eine Verlängerung der Keimbildungszeit in der Regel zu einer Absenkung, eine Verkürzung zu einer Erhöhung.

Bei Lithiumalumosilikat-Glaskeramiken kann in dieser Weise zum Beispiel eine farblos transparente Glaskeramik mit der Hauptkristallphase Hochquarz-Mischkristall und eine metallkolloidgefärbte Keatit-haltige Glaskeramik aus einem Ausgangsglas erzeugt werden.

### Beispiele

Die Erfindung wird anhand der in der Tabelle zusammengefassten Beispiele weiter erläutert. Um eine bessere Vergleichbarkeit der Ergebnisse zu gewährleisten, wurde die Grundzusammensetzung der Gläser, d.h. ohne Metallkolloidbildner und Redox-Partner, in engen Grenzen gleich gehalten.

Die einzelnen Gläser mit den in Tabelle 1 aufgeführten Zusammensetzungen wurden im Quarzglastiegel bei 1500 - 1650 °C geschmolzen und zu flachen Gussblöcken gegossen. Diese wurden anschließend bei einer Temperatur unterhalb der Glastransformationstemperatur T_{g} entspannt und langsam auf Raumtemperatur abgekühlt. Aus den Gussblöcken wurden Proben hergestellt, die nach einer Keimbildung im Bereich von 730 - 790 °C für 0,25 bis 2 Stunden bei der in der Tabelle angegebenen Maximaltemperatur (Haltezeit 0 - 1 Stunde) keramisiert wurden. Die verwendeten Keimbildungs- und Keramisierungstemperaturen wurden mit Hilfe einer DTA-Messung bestimmt. Die Transparenz τ*ᵥᵢₛ* wurde an 4 mm dicken Proben bestimmt und über den Bereich des sichtbaren Lichts (380 nm - 780 nm) gemittelt. Die thermische Ausdehnung wurde an ausgewählten Proben im Bereich von 20 - 700 °C bestimmt.

Die in der Tabelle mit einem Stern (*) versehenen Beispiele sind Vergleichsbeispiele.

Beispiel 1 zeigt eine Glaskeramik, die sich als farbloses Glas herstellen lässt und bei einer Maximaltemperatur von 820 °C in eine farblose transparente Glaskeramik umwandeln lässt. Bei einer Maximaltemperatur von 890 °C bilden sich dagegen Zinn-Kolloide, die eine braune bis schwarze Färbung hervorrufen. Allerdings führt der hohe Zinngehalt von über 1,9 % SnO₂ zu einer starken Entglasungsneigung, die OEG des Ausgangsglases ist größer als 1450 °C. Um eine gut verarbeitbare metallkolloidhaltige Glaskeramik herzustellen, sollte in diesem Grundsystem daher der Zinngehalt vorzugsweise auf SnO₂ < 1,9 %, bevorzugt < 1,7 % abgesenkt werden.

Beispiel 2 zeigt dagegen eine erfindungsgemäße Glaskeramik, die bedingt durch den niedrigen Zinngehalt eine geringere Entglasungsneigung als Beispiel 1 zeigt.

Beispiel 3 verdeutlicht die Rolle des Zinns als Kolloidbildner. Wenn die Glaskeramik kein Zinn, das hier als Metallkolloidbildner wirkt, enthält, werden bei der Keramisierung keine Kolloide gebildet, die Glaskeramik bleibt farblos.

Beispiel 4 veranschaulicht die Bedeutung des Redox-Partners, in diesem Fall Arsen. Die Glaskeramik enthält zwar eine große Menge an Zinnoxid als Metallkolloidbildner (sogar mehr als in Beispiel 1), zeigt jedoch keine ausreichende Färbung im keramisierten Zustand, da sich die Kolloide mangels eines Redox-Partners nicht ausbilden können.

Im Fall von Zinn und Arsen ist die Zuordnung, welches Element Kolloidbildner und welches Redox-Partner ist nicht eindeutig, Gefügeaufnahmen zeigen sowohl arsen- als auch zinnreiche Strukturen.

Analog zur Kombination Zinn/Arsen lässt sich auch die Kombination aus Zinn und Antimon verwenden, wie Beispiel 5 zeigt. Beispiel 6 und 7 zeigen weitere vorteilhafte Kombinationen von Zinn und Arsen.

Wird die Menge an Metallkolloidbildner zu groß gewählt, erfolgt die Bildung der Kolloide bereits während der Abkühlphase des Glases. Das Glas bleibt in diesem Fall nicht farblos. Beispiel 8 verdeutlicht diese Problematik. Hier wurde eine zu große Menge an Wismutoxid eingesetzt, so dass sich das Ausgangsglas bereits rötlich verfärbt. Die Menge an Wismut sollte daher kleiner als 5 % sein. Im Gegensatz dazu ergibt die Zusammensetzung 9 ein transparent farbloses Ausgangsglas, das sich zu einer schwarzen oder einer ansprechend grau-violett gefärbten Glaskeramik umwandeln lässt. Im Fall von Wismut stellt Zinn eine besonders gute Wahl des Redox-Partners dar. Dies lässt sich gut anhand von Beispiel 10 erkennen.

Die Beispiele 11 bis 17 zeigen weitere vorteilhafte Umsetzungen der Erfindung.

Mit der Erfindung lassen sich eine Reihe von Vorteilen erzielen, die bisher in dieser Form noch nicht verwirklicht werden konnten. Das in die Glaskeramik umwandelbare Glas ist farblos, es verunreinigt die Glaswanne nicht, so dass die Umstellung auf ein anderes Glas in derselben Wanne bedeutend schneller und problemloser ablaufen kann als bei einem gefärbten Glas. Das Glas lässt sich durch die geeignete Wahl des Keramisierungsprogramms in eine transparent farblose Glaskeramik oder in eine metallkolloidhaltige schwarze oder gefärbte Glaskeramik umwandeln. Diesen Doppelnutzen zeigen z.B. Gläser 5 und 6 in Tabelle 1.

Die erfindungsgemäßen Glaskeramiken können in allen Bereichen verwendet werden, in denen die Farbe und Transparenz der Glaskeramik eine Rolle spielen, da sich durch die gezielte Einstellung der Kolloidgröße die Transmission in verschiedenen Spektralbereichen beeinflussen lässt, z.B. beim Einsatz als Kochflächen, Geschirr und Küchengeräte, Kaminsichtscheiben, Auskleidungen für Öfen, in der Beleuchtungstechnik, als Substrat, Lichtfilter, Architekturmaterial oder Dentalwerkstoff. Die Eigenschaft, dass sich eine gemäß der Erfindung hergestellte transparent farblose Glaskeramik durch weitere Wärmeeinwirkung in eine gefärbte Glaskeramik umwandeln lässt, bietet Möglichkeiten für zahlreiche weitere Anwendungen, wie ein Brandschutzglas, das sich beim Brand zum Schutz vor IR-Strahlung verdunkelt. Auch der Einsatz als Temperatursensor, z.B. zum Nachweis von Überhitzung ist möglich. Eine teilweise Umwandlung in transparente und gefärbte Bereiche in einem Werkstück ermöglicht zusätzliche Funktionalitäten und Designmöglichkeiten.

**Tabelle 1: mit * gekennzeichnete Beispiele dienen als Vergleichsbeispiele; n.b. = nicht ermittelt**

| Beispiel | 1* | 2 | 3* | 4* | 5 | 6 | 7 | 8* | 9 |
|---|---|---|---|---|---|---|---|---|---|
| siO₂ | 68,20 % | 65,49 % | 69,54 % | 67,74 % | 63,93 % | 66,57 % | 68,86 % | 58.30 % | 65,24 % |
| Al₂O₃ | 18,34 % | 20,84 % | 18,7 % | 21.56 % | 22,43 % | 21,19 % | 18,51 % | 19,75 % | 20,78 % |
| Li₂O | 3.92 % | 3,71 % | 4.00 % | 3,84 % | 3,73 % | 3,77 % | 3,96 % | 3,31 % | 3,69 % |
| Na₂O | | 0,41 % | | 0,43 % | 0.52 % | 0.42 % | | 0,24 % | 0,41 % |
| K₂O | 0,57 % | 0,11 % | 0,58 % | 0,12 % | | 0,12 | 0,58 % | | 0.12% |
| MgO | 1.62 % | 0,92 % | 1,65 % | 0,95 % | 0,48 % | 0,93 % | 1,64 % | 0,53 % | 0,92 % |
| CaO | | | | | | | | | |
| BaO | | | | | 2,02 % | | | 1,81 % | |
| ZnO | 1,91 % | 1,65 % | 1,95 % | 1,71 % | 1,79 % | 1,68 % | 1,93 % | 1,53 % | 1,65 % |
| TiO₂ | | 2,38 % | | | | 1,87 % | | 1,63 % | 2,38 % |
| ZrO₂ | 2,56 % | 1,68 % | 2,61 % | 1,74 % | 1,70 % | 0,87 % | 2,59 % | 1,25 % | 1,63 % |
| Ag₂O | | | | | | | | | |
| snO₂ | 1.92 % | 1,87 % | | 1,94 % | 1,83 % | 1,65 % | 0,97 % | 1,53 % | 0,22 % |
| As₂O₃ | 0.96 % | 0,93 % | 0,98 % | | | 0,94 | 0,96 % | 0,62 % | |
| Sb₂O₃ | | | | | 1,59 % | | | | |
| Bi₂O₃ | | | | | | | | 9,49 % | 2,97 % |
| | | | | | | | | | |
| T_{g} | ca. 695°C | ca. 700°C | ca. 705°C | ca. 720°C | ca. 720°C | ca. 705°C | ca. 705°C | n.b. | ca. 695°C |
| OEG | > 1450°C | < 1450°C | n.b. | n.b. | < 1450°C | < 1450°C | < 1450°C | < 1450°C | < 1450°C |
| Farbe / Transparenz des Glases | farblos / transparent | farblos / transparent | farblos / transparent | farblos / transparent | farblos / transparent | farblos / transparent | farblos / transparent | rötlich / transparent | farblos / transparent |
| | | | | | | | | | |
| Maximaltemperatur | 820 °C | 890 °C | 890 °C | 890 °C | 890 °C | 890 °C | 890°C | 730°C | 890°C |
| Hauptkristallphase | Hochquarz-Mischkristall | Hochquarz-Mischkristall | Hochquarz-Mischkristall | Hochquarz-Mischkristall | Hochquarz-Mischkristall | Hochquarz-Mischkristall | Keatit-Mischkristall | amorph | Hochquarz-Mischkristall |
| Farbe / Transparent | farblos / transparent; τᵥᵢₛ=85,1 % | transparent gelblich | weiß / opaque | bräunlich / transparent | farblos / transparent leichte Trübung | farblos / transparent | hellbraun / transparent | rot / transparent | schwarz / opak |
| | | | | | | | | | |
| Maximaltemperatur | 890 °C | 1050 °C | 1050 °C | 1050 °C | 1000 °C | 1000 °C | 1000°C | 890°C | 1000°C |
| Hauptkristallphase | Keatit-Mischkristall | Keatit-Mischkristall | Keatit-Mischkristall | Keatit-Mischkristall | Keatit-Mischkristall | Keatit-Mischkristall | Keatit-Mischkristall | Keatit-Mischkristall | Keatit-Mischkristall |
| Farbe / Transparenz | schwarzbraun, opak | grauschwarz, opak | weiß, opak | weiß, opak | schwarz, opak | schwarz, opak | grau-beige / opak | grau-violett / opak | grau-violett / opak |
| | | | | | | | | | |
| Thermische Ausdehnung | 0,85·10⁻⁶/K | n.b. | 0,41·10⁻⁶/K | 0,65·10⁻⁶/K | 0,86·10⁻⁶/K | 0,86·10⁻⁶/K | n.b. | 1,55·10⁻⁶/K | 1,07-10⁻⁶/K |

**Tabelle 1 (Fortsetzung): mit * gekennzeichnete Beispiele dienen als Vergleichsbeispiele; n.b. = nicht ermittelt**

| Beispiel | 10 | 11 | 12 | 13 | 14 | 15 | 16 | 17 |
|---|---|---|---|---|---|---|---|---|
| SiO₂ | 65,42 % | 65,06 % | 66,77 % | 67,10 % | 67,44 % | 67,38 % | 67.72 % | 67,38 % |
| Al₂O₃ | 20,84 % | 20,72 % | 21,25 % | 21,35 % | 21,46 % | 21,44 % | 21,55 % | 21,44 % |
| Li₂O | 3,70 % | 3,68 % | 3,76 % | 3,80 % | 3,82 % | 3,82 % | 3,84 % | 3,82 % |
| Na₂O | 0,41 % | 0,41 % | 0,42 % | 0,42 % | 0,43 % | 0,42 % | 0,43 % | 0,42 % |
| K₂O | 0,12 % | 0,12 % | 0,12 % | 0,12 | 0,12 % | 0,12 % | 0,12 % | 0,12 % |
| M₄O | 0,92 % | 0,92 % | 0,93 % | 0,94 % | 0,94 % | 0,94 % | 0,95 % | 0,94 % |
| CaO | | | | | | | | |
| BaO | | | | | | | | |
| ZnO | 1,65 % | 1,64 % | 1,68 % | 1,69 % | 1,70 % | 1,70 % | 1,71 % | 1,70 % |
| TO₂ | 2,38 % | 2,37 | | | | | | |
| zrO₂ | 1,63 % | 1,63 | 1,71 % | 1,72 % | 1,72 | 1,73 % | 1,74 % | 1,73 % |
| Ag₂O | | | | | | | | 0,5 % |
| snO₂ | 0,97 % | 0,99% | 1,40 % | 1,40 % | 1,41 % | 0,5 % | 0,50 % | 1,0 % |
| As₂O₃ | 0,97 % | | 0,95% | 0,95 | 0,96 | 0,96% | 0,96 % | 0,96 % |
| Sb₂O₃ | | | | | | | | |
| Bi₂O₃ | 0,97 % | 2,47 % | 0,99 % | 0,50 % | | 0,99 % | 0,50 % | |
| | | | | | | | | |
| T_{g} | ca. 695°C | ca. 695°C | ca. 720°C | ca. 720°C | ca. 720°C | ca. 720°C | ca. 720°C | ca. 720°C |
| OEG | < 1450°C | < 1450°C | < 1450°C | < 1450°C | < 1450°C | < 1450°C | < 1450°C | < 1450°C |
| Farbe / Transparenz des Glases | farblos / transparent | farblos / transparent | farblos, transparent | farblos, transparent | farblos, transparent | farblos, transparent | farblos, transparent | farblos / transparent |
| | | | | | | | | |
| Maximaltemperatur | 890°C | 890°C. | 890°C | 890°C | 890°c | 890°C | 890°C | 890°C |
| Hauptkristallphase | Hochquarz-Mischkristall | Hochquarz-Mischkristall | Hochquarz-Mischkristall | Hochquarz-Mischkristall | Keatit-Mischkristall | n.b. | n.b. | Hochquarz-Mischkristall |
| Farbe / Transparenz | leicht rötlich transparent | / schwarz / opak | schwarz / opak | schwarz / opak | farblos / transluzent | farblos / transparent | farblos / transparent | gelb / transparent |
| | | | | | | | | |
| Maximaltemperatur | 1000°C | 1000°C | 1000°C | 1000°C | 1000°C | 1000°C | 1000°C | 1000°C |
| Hauptkristallphase | Keatit-Mischkristall | Keatit-Mischkristall | Keatit-Mischkristall | Keatit-Mischkristall | Keatit-Mischkristall | Hochquarz-Mischkristall | Hochquarz-Mischkristall | Hochquarz-Mischkristall |
| Farbe / Transparenz | blau-grau / opak | dunkelgrau opak | / grau / opak | grau-braun opak | / hell-grau / | grau-blau / | grau-blau / | gelblichmetallisch / opak |
| | | | | | | | | |
| Thermische Ausdehnung | 1,05·10⁻⁶/K | 0,99·10⁻⁶/K | 0.94·10⁻⁶/K | 0,84·10⁻⁶/K | 0,71·10⁻⁶/K | -0,35·10⁻⁶/K | -0,76·10⁻⁶/K | 0,04·10⁻⁶/K |

## Patentansprüche

1. Kolloidbildnerhaltiges farblos, transparentes in eine farblose oder metallkolloidgefärbte Glaskeramik umwandelbares Alumosilikatglas, **dadurch gekennzeichnet,**
- **dass** das Alumosilikatglas ein Lithium- oder Magnesiumalumosilikatglas ist, das (in Gew.-% auf Oxidbasis)
SiO₂ 55,0 bis 75,0, bevorzugt 65,0 bis 70,0
Al₂O₃ 18,0 bis 26,0, bevorzugt 18,0 bis 23,0
Li₂O 1,5 bis 5,0, bevorzugt 3,4 bis 4,2
ZnO 0 bis 3,0, bevorzugt 0,8 bis 2,5
MgO 0 bis 2,5, bevorzugt 0 bis 2,0
CaO 0 bis 2,5, bevorzugt 0 bis 2,0
SrO 0 bis 2,5, bevorzugt 0 bis 2,0
Na₂O0 bis 1,5, bevorzugt 0 bis 0,8
K₂O 0 bis 1,5, bevorzugt 0 bis 0,8
TiO₂ 0 bis 4,0, bevorzugt 0,5 bis 3,0
ZrO₂ 0,5 bis 2,7
P₂O₅ 0 bis 8,0, bevorzugt 0 bis 3,0
oder
SiO₂ 35,0 bis 65,0, bevorzugt 45,0 bis 62,0
Al₂O₃ 15,0 bis 40,0, bevorzugt 15,0 bis 25,0
MgO 2,0 bis 20,0, bevorzugt 2,0 bis 10,0
ZnO 0 bis 15,0, bevorzugt 2,0 bis 15,0
BaO 0 bis 10,0, bevorzugt 0 bis 3,0
SrO 0 bis 10,0, bevorzugt 0 bis 3,0
TiO₂ 0 bis 10,0, bevorzugt 0,5 bis 8,0
ZrO₂ 0,5 bis 10,0, bevorzugt 0,5 bis 4,0
P₂O₅ 0 bis 10,0, bevorzugt 0 bis 5,0
B₂O₃ 0 bis 10,0, bevorzugt 0 bis 5,0
enthält,
- **dass** mindestens ein Metallkolloidbildner (in Gew.-% auf Oxidbasis) in folgenden Mengen im Glas vorhanden ist:
Au, Ag, Pt, Pd 0,005 bis 0,6, vorzugsweise bis 0,4
Cu, Fe 0,1 bis 1,2, vorzugsweise 0,2 bis 1,0, insbesondere bis 0,8
As, Sb 0,1 bis 6,0, vorzugsweise 0,25 bis 3,0
Bi von 0,1 bis 5,0, vorzugsweise 0,10 bis 4,0, insbesondere 0,15 bis 3,5
Nb 0,1 bis 6,0, vorzugsweise 0,25 bis 5,0
Sn 0,1 bis 1,9, vorzugsweise bis 1,7
- **dass** mindestens ein Redox-Partner (in Gew.-% auf Oxidbasis) in folgenden Mengen im Glas vorhanden ist:
As 0,1 bis zu 6,0, bevorzugt 0,25 bis 3,0
Sb 0,1 bis zu 6,0, bevorzugt 0,25 bis 3,0
Sn 0,1 bis < 1,9, bevorzugt 0,2 bis 1,8
Ce 0,05 bis 3,0, bevorzugt 0,1 bis 2,0
Fe 0,1 bis 2,0, bevorzugt 0,1 bis 1,0
W 0,1 bis 4,0, bevorzugt 0,1 bis 3,0
Mn 0,05 bis 3,0, bevorzugt 0,1 bis 2,0
- wobei Metallkolloidbildner und Redox-Partner nicht identisch sein dürfen,
- **dass** es durch Keramisierung bis zu einer Maximaltemperatur T₁ in eine transparent farblose Glaskeramik und bei Keramisierung bis zu einer Maximaltemperatur T₂ in eine metallkolloidgefärbte Glaskeramik umwandelbar ist, wobei T₁ < T₂.

2. Kolloidbildnerhaltiges Alumosilikatglas nach Anspruch 1, **dadurch gekennzeichnet, dass** es die folgenden Kombinationen von Metallkolloidbildnern mit Redox-Partnern (in Gew.- % auf Oxidbasis)enthält:
| | | | | |
|---|---|---|---|---|
| Sn | 0,1 - 1,8 | mit As | 0,25 - 3 | oder |
| Sn | 0,1 - 1,8 | mit Sb | 0,25 - 3 | oder |
| Bi | 0,1 - 4 | mit Sn | 0,1 - 1,8 | |

3. Kolloidbildnerhaltiges Glas nach Anspruch 1 oder 2, **dadurch gekennzeichnet, dass** es eine obere Entglasungstemperatur (OEG) kleiner als 1450 °C, bevorzugt kleiner als 1400 °C, besonders bevorzugt kleiner als 1350 °C aufweist.

4. Transparente farblose oder metallkolloidgefärbte Alumosilikatglaskeramik, **dadurch gekennzeichnet,**
- **dass** sie eine Lithium- oder Magnesiumalumosilikatglaskeramik ist, die aus einem farblos transparenten Ausgangsglas druch Keramisierung hergestellt ist und (in Gew.-% auf Oxidbasis)
SiO₂ 55,0 bis 75,0, bevorzugt 65,0 bis 70,0
Al₂O₃ 18,0 bis 26,0, bevorzugt 18,0 bis 23,0
Li₂O 1,5 bis 5,0, bevorzugt 3,4 bis 4,2
ZnO 0 bis 3,0, bevorzugt 0,8 bis 2,5
MgO 0 bis 2,5, bevorzugt 0 bis 2,0
CaO 0 bis 2,5, bevorzugt 0 bis 2,0
SrO 0 bis 2,5, bevorzugt 0 bis 2,0
Na₂O0 bis 1,5, bevorzugt 0 bis 0,8
K₂O 0 bis 1,5, bevorzugt 0 bis 0,8
TiO₂ 0 bis 4,0, bevorzugt 0,5 bis 3,0
ZrO₂ 0,5 bis 2,7
P₂O₅ 0 bis 8,0, bevorzugt 0 bis 3,0
oder
SiO₂ 35,0 bis 65,0, bevorzugt 45,0 bis 62,0
Al₂O₃ 15,0 bis 40,0, bevorzugt 15,0 bis 25,0
MgO 2,0 bis 20,0, bevorzugt 2,0 bis 10,0
ZnO 0 bis 15,0, bevorzugt 2,0 bis 15,0
BaO 0 bis 10,0, bevorzugt 0 bis 3,0
srO 0 bis 10,0, bevorzugt 0 bis 3,0
TiO₂ 0 bis 10,0, bevorzugt 0,5 bis 8,0
ZrO₂ 0,5 bis 10,0, bevorzugt 0,5 bis 4,0
P₂O₅ 0 bis 10,0, bevorzugt 0 bis 5,0
B₂O₃ 0 bis 10,0, bevorzugt 0 bis 5,0
enthält,
- **dass** mindestens ein Metallkolloidbildner (in Gew.-% auf Oxidbasis) in Mengen von:
Au, Ag, Pt, Pd 0,005 bis 0,6, vorzugsweise bis 0,4
Cu, Fe 0,1 bis 1,2, vorzugsweise 0,2 bis 1, insbesondere bis 0,8
As, Sb 0,1 bis 6, vorzugsweise 0,25 bis 3
Bi 0,1 bis 5, vorzugsweise 0,10 bis 4, insbesondere 0,15 bis 3,5
Nb 0,1 bis 6, vorzugsweise 0,25 bis 5
Sn 0,1 bis 1,9, vorzugsweise bis 1,7
vorhanden ist
- **dass** mindestens ein Redox-Partner (in Gew.-% auf Oxidbasis) in Mengen von:
As 0,1 bis zu 6,0, bevorzugt 0,25 bis 3,0
Sb 0,1 bis zu 6,0, bevorzugt 0,25 bis 3,0
Sn 0,1 bis < 1,9, bevorzugt 0,2 bis 1,8
Ce 0,05 bis 3,0, bevorzugt 0,1 bis 2,0
Fe 0,1 bis 2,0, bevorzugt 0,1 bis 1,0
W 0,1 bis 4,0, bevorzugt 0,1 bis 3,0
Mn 0,05 bis 3, besonders bevorzugt 0,1 bis 2,0.
vorhanden ist
- wobei Metallkolloidbildner und Redox-Partner nicht identisch sind.

5. Alumosilikatglaskeramik nach Anspruch 4, **dadurch gekennzeichnet, dass** sie die folgenden Kombinationen von Metallkolloidbildnern mit Redox-Partnern (in Gew.-% auf Oxidbasis) enthält
| | | | | |
|---|---|---|---|---|
| Sn | 0,1 - 1,8 | mit As | 0,25 - 3 | oder |
| Sn | 0,1 - 1,8 | mit Sb | 0,25 - 3 | oder |
| Bi | 0,1 - 4 | mit Sn | 0,1 - 1,8. | |

6. Transparente farblose Alumosilikatglaskeramik nach Anspruch 4 oder 5, **dadurch gekennzeichnet, dass** sie durch eine Wärmebehandlung in eine metallkolloidgefärbte Glaskeramik umwandelbar ist.

## Claims

1. Colloid former-containing colourless, transparent aluminosilicate glass which can be converted into a colourless or metal colloid-coloured glass-ceramic, **characterized**
- **in that** the aluminosilicate glass is a lithium or magnesium aluminosilicate glass containing (in % by weight on an oxide basis)
SiO₂ from 55.0 to 75.0, preferably from 65.0 to 70.0,
Al₂O₃ from 18.0 to 26.0, preferably from 18.0 to 23.0,
Li₂O from 1.5 to 5.0, preferably from 3.4 to 4.2,
ZnO from 0 to 3.0, preferably from 0.8 to 2.5, MgO from 0 to 2.5, preferably from 0 to 2.0,
CaO from 0 to 2.5, preferably from 0 to 2.0,
SrO from 0 to 2.5, preferably from 0 to 2.0,
Na₂O from 0 to 1.5, preferably from 0 to 0.8,
K₂O from 0 to 1.5, preferably from 0 to 0.8,
TiO₂ from 0 to 4.0, preferably from 0.5 to 3.0,
ZrO₂ from 0.5 to 2.7,
P₂O₅ from 0 to 8.0, preferably from 0 to 3.0,
or
SiO₂ from 35.0 to 65.0, preferably from 45.0 to 62.0,
Al₂O₃ from 15.0 to 40.0, preferably from 15.0 to 25.0,
MgO from 2.0 to 20.0, preferably from 2.0 to 10.0,
ZnO from 0 to 15.0, preferably from 2.0 to 15.0,
BaO from 0 to 10.0, preferably from 0 to 3.0,
SrO from 0 to 10.0, preferably from 0 to 3.0,
TiO₂ from 0 to 10.0, preferably from 0.5 to 8.0,
ZrO₂ from 0.5 to 10.0, preferably from 0.5 to 4.0,
P₂O₅ from 0 to 10.0, preferably from 0 to 5.0, B₂O₃ from 0 to 10.0, preferably from 0 to 5.0,
- **in that** at least one metal colloid former (in % by weight on an oxide basis) is present in the following amounts in the glass:
Au, Ag, Pt, Pd from 0.005 to 0.6, preferably up to 0.4,
Cu, Fe from 0.1 to 1.2, preferably from 0.2 to 1.0, in particular up to 0.8,
As, Sb from 0.1 to 6.0, preferably from 0.25 to 3.0,
Bi from 0.1 to 5.0, preferably from 0.10 to 4.0, in particular from 0.15 to 3.5,
Nb from 0.1 to 6.0, preferably from 0.25 to 5.0,
Sn from 0.1 to 1.9, preferably up to 1.7,
- **in that** at least one redox partner (in % by weight on an oxide basis) is present in the following amounts in the glass:
As from 0.1 to 6.0, preferably from 0.25 to 3.0,
Sb from 0.1 to 6.0, preferably from 0.25 to 3.0,
Sn from 0.1 to < 1.9, preferably from 0.2 to 1.8,
Ce from 0.05 to 3.0, preferably from 0.1 to 2.0,
Fe from 0.1 to 2.0, preferably from 0.1 to 1.0,
W from 0.1 to 4.0, preferably from 0.1 to 3.0,
Mn from 0.05 to 3.0, preferably from 0.1 to 2.0,
- where metal colloid former and redox partner must not be identical,
- **in that** it can be converted into a transparent colourless glass-ceramic by ceramicization up to a maximum temperature T₁ and into a metal colloid-coloured glass-ceramic on ceramicization up to a maximum temperature T₂, where T₁ < T₂.

2. Colloid former-containing aluminosilicate glass according to Claim 1, **characterized in that** it contains the following combinations of metal colloid formers with redox partners (in % by weight on an oxide basis):
| | | | | |
|---|---|---|---|---|
| Sn | 0.1 - 1.8 | with As | 0.25 - 3 | or |
| Sn | 0.1 - 1.8 | with Sb | 0.25 - 3 | or |
| Bi | 0.1 - 4 | with Sn | 0.1 - 1.8. | |

3. Colloid former-containing glass according to Claim 1 or 2, **characterized in that** it has an upper devitrification temperature (OEG) of less than 1450°C, preferably less than 1400°C, particularly preferably less than 1350°C.

4. Transparent colourless or metal colloid-coloured aluminosilicate glass-ceramic, **characterized**
- **in that** it is a lithium or magnesium aluminosilicate glass-ceramic which is produced from a colourless transparent starting glass by ceramicization and contains (in % by weight on an oxide basis)
SiO₂ from 55.0 to 75.0, preferably from 65.0 to 70.0,
Al₂O₃ from 18.0 to 26.0, preferably from 18.0 to 23.0,
Li₂O from 1.5 to 5.0, preferably from 3.4 to 4.2,
ZnO from 0 to 3.0, preferably from 0.8 to 2.5,
MgO from 0 to 2.5, preferably from 0 to 2.0,
CaO from 0 to 2.5, preferably from 0 to 2.0,
SrO from 0 to 2.5, preferably from 0 to 2.0,
Na₂O from 0 to 1.5, preferably from 0 to 0.8,
K₂O from 0 to 1.5, preferably from 0 to 0.8,
TiO₂ from 0 to 4.0, preferably from 0.5 to 3.0,
ZrO₂ from 0.5 to 2.7,
P₂O₅ from 0 to 8.0, preferably from 0 to 3.0,
or
SiO₂ from 35.0 to 65.0, preferably from 45.0 to 62.0,
Al₂O₃ from 15.0 to 40.0, preferably from 15.0 to 25.0,
MgO from 2.0 to 20.0, preferably from 2.0 to 10.0,
ZnO from 0 to 15.0, preferably from 2.0 to 15.0,
BaO from 0 to 10.0, preferably from 0 to 3.0,
SrO from 0 to 10.0, preferably from 0 to 3.0,
TiO₂ from 0 to 10.0, preferably from 0.5 to 8.0,
zrO₂ from 0.5 to 10.0, preferably from 0.5 to 4.0,
P₂O₅ from 0 to 10.0, preferably from 0 to 5.0,
B₂O₃ from 0 to 10.0, preferably from 0 to 5.0,
- **in that** at least one metal colloid former is present in amounts (in % by weight on an oxide basis) of:
Au, Ag, Pt, Pd from 0.005 to 0.6, preferably up to 0.4,
Cu, Fe from 0.1 to 1.2, preferably from 0.2 to 1, in particular up to 0.8,
As, Sb from 0.1 to 6, preferably from 0.25 to 3,
Bi from 0.1 to 5, preferably from 0.10 to 4, in particular from 0.15 to 3.5,
Nb from 0.1 to 6, preferably from 0.25 to 5,
Sn from 0.1 to 1.9, preferably up to 1.7,
- **in that** at least one redox partner is present in amounts (in % by weight on an oxide basis) of:
As from 0.1 to 6.0, preferably from 0.25 to 3.0,
Sb from 0.1 to 6.0, preferably from 0.25 to 3.0,
Sn from 0.1 to < 1.9, preferably from 0.2 to 1.8,
Ce from 0.05 to 3.0, preferably from 0.1 to 2.0,
Fe from 0.1 to 2.0, preferably from 0.1 to 1.0,
W from 0.1 to 4.0, preferably from 0.1 to 3.0,
Mn from 0.05 to 3.0, particularly preferably from 0.1 to 2.0,
- where metal colloid former and redox partner are not identical.

5. Aluminosilicate glass-ceramic according to Claim 4, **characterized in that** it contains the following combinations of metal colloid formers with redox partners (in % by weight on an oxide basis)
| | | | | |
|---|---|---|---|---|
| Sn | 0.1 - 1.8 | with As | 0.25 - 3 | or |
| Sn | 0.1 - 1.8 | with Sb | 0.25 - 3 | or |
| Bi | 0.1 - 4 | with Sn | 0.1 - 1.8. | |

6. Transparent colourless aluminosilicate glass-ceramic according to Claim 4 or 5, **characterized in that** it can be converted by heat treatment into a metal colloid-coloured glass-ceramic.

## Revendications

1. Verre d'aluminosilicate transparent, incolore, contenant un générateur de colloïde, transformable en une vitrocéramique incolore ou colorée avec un colloïde métallique, **caractérisé**
- **en ce que** le verre d'aluminosilicate est un verre d'aluminosilicate de lithium ou de magnésium, qui contient (en % en poids sur la base des oxydes)
SiO₂ 55,0 à 75,0, de préférence 65,0 à 70,0
Al₂O₃ 18,0 à 26,0, de préférence 18,0 à 23,0
Li₂O 1,5 à 5,0, de préférence 3,4 à 4,2
ZnO 0 à 3,0, de préférence 0,8 à 2,5
MgO 0 à 2,5, de préférence 0 à 2,0
CaO 0 à 2,5, de préférence 0 à 2,0
SrO 0 à 2,5, de préférence 0 à 2,0
Na₂O 0 à 1,5, de préférence 0 à 0,8
K₂O 0 à 1,5, de préférence 0 à 0,8
TiO₂ 0 à 4,0, de préférence 0,5 à 3,0
ZrO₂ 0,5 à 2,7
P₂O₅ 0 à 8,0, de préférence 0 à 3,0
ou
SiO₂ 35,0 à 65,0, de préférence 45,0 à 62,0
Al₂O₃ 15,0 à 40,0, de préférence 15,0 à 25,0
MgO 2,0 à 20,0, de préférence 2,0 à 10,0
ZnO 0 à 15,0, de préférence 2,0 à 15,0
BaO 0 à 10,0, de préférence 0 à 3,0
SrO 0 à 10,0, de préférence 0 à 3,0
TiO₂ 0 à 10,0, de préférence 0,5 à 8,0
ZrO₂ 0,5 à 10,0, de préférence 0,5 à 4,0
P₂O₅ 0 à 10,0, de préférence 0 à 5,0
B₂O₃ 0 à 10,0, de préférence 0 à 5,0,
- **en ce qu'**au moins un générateur de colloïde métallique (en % en poids sur la base des oxydes) est présent dans le verre en les quantités suivantes :
Au, Ag, Pt, Pd 0,005 à 0,6, de préférence à 0,4 Cu, Fe, 0,1 à 1,2, de préférence 0,2 à 1,0, en particulier à 0,8
As, Sb 0,1 à 6,0, de préférence 0,25 à 3,0 Bi de 0,1 à 5,0, de préférence 0,10 à 4,0, en particulier 0,15 à 3,5
Nb 0,1 à 6,0, de préférence 0,25 à 5,0 Sn 0,1 à 1,9, de préférence à 1,7
- **en ce qu'**au moins un partenaire redox (en % en poids sur la base des oxydes) est présent dans le verre en les quantités suivantes :
As 0,1 à 6,0, de préférence 0,25 à 3,0
Sb 0,1 à 6,0, de préférence 0,25 à 3,0
Sn 0,1 à < 1,9, de préférence 0,2 à 1,8
Ce 0,05 à 3,0, de préférence 0,1 à 2,0
Fe 0,1 à 2,0, de préférence 0,1 à 1,0
W 0,1 à 4,0, de préférence 0,1 à 3,0
Mn 0,05 à 3,0, de préférence 0,1 à 2,0
- le générateur de colloïde métallique et le partenaire redox ne pouvant pas être identiques,
- **en ce qu'**il est transformable par céramisation jusqu'à une température maximale T₁ en une vitrocéramique transparente incolore et dans le cas de céramisation jusqu'à une température maximale T₂ en une vitrocéramique colorée avec un colloïde métallique, T₁ étant < T₂.

2. Verre d'aluminosilicate contenant un générateur de colloïde selon la revendication 1, **caractérisé en ce qu'**il contient les associations suivantes de générateurs de colloïdes métalliques avec des partenaires redox (en % en poids sur la base des oxydes) :
| | | | | |
|---|---|---|---|---|
| Sn | 0,1 - 1,8 | avec As | 0,25 - 3 | ou |
| Sn | 0,1 - 1,8 | avec Sb | 0,25 - 3 | ou |
| Bi | 0,1 - 4 | avec Sn | 0,1 - 1,8. | |

3. Verre contenant un générateur de colloïde selon la revendication 1 ou 2, **caractérisé en ce qu'**il présente une température supérieure de dévitrification (TSD) inférieure à 1 450 °C, de préférence inférieure à 1 400 °C, de façon particulièrement préférée, inférieure à 1 350 °C.

4. Vitrocéramique transparente incolore ou colorée avec un colloïde métallique, **caractérisée**
- **en ce qu'**elle est une vitrocéramique d'aluminosilicate de lithium ou de magnésium qui est produite par céramisation à partir d'un verre transparent incolore de départ et contient (en % en poids sur la base des oxydes)
SiO₂ 55,0 à 75,0, de préférence 65,0 à 70,0
Al₂O₃ 18,0 à 26,0, de préférence 18,0 à 23,0
Li₂O 1,5 à 5,0, de préférence 3,4 à 4,2
ZnO 0 à 3,0, de préférence 0,8 à 2,5
MgO 0 à 2,5, de préférence 0 à 2,0
CaO 0 à 2,5, de préférence 0 à 2,0
SrO 0 à 2,5, de préférence 0 à 2,0
Na₂O 0 à 1,5, de préférence 0 à 0,8
K₂O 0 à 1,5, de préférence 0 à 0,8
TiO₂ 0 à 4,0, de préférence 0,5 à 3,0
ZrO₂ 0,5 à 2,7
P₂O₅ 0 à 8,0, de préférence 0 à 3,0
ou
SiO₂ 35,0 à 65,0, de préférence 45,0 à 62,0
Al₂O₃ 15,0 à 40,0, de préférence 15,0 à 25,0
MgO 2,0 à 20,0, de préférence 2,0 à 10,0
ZnO 0 à 15,0, de préférence 2,0 à 15,0
BaO 0 à 10,0, de préférence 0 à 3,0
SrO 0 à 10,0, de préférence 0 à 3,0
TiO₂ 0 à 10,0, de préférence 0,5 à 8,0
ZrO₂ 0,5 à 10,0, de préférence 0,5 à 4,0
P₂O₅ 0 à 10,0, de préférence 0 à 5,0
B₂O₃ 0 à 10,0, de préférence 0 à 5,0,
- **en ce qu'**au moins un générateur de colloïde métallique (en % en poids sur la base des oxydes) est présent dans lie verre en les quantités suivantes :
Au, Ag, Pt, Pd 0,005 à 0,6, de préférence à 0,4 Cu, Fe, 0,1 à 1,2, de préférence 0,2 à 1, en particulier à 0,8
As, Sb 0,1 à 6, de préférence 0,25 à 3 Bi 0,1 à 5, de préférence 0,10 à 4, en particulier 0,15 à 3,5
Nb 0,1 à 6, de préférence 0,25 à 5
Sn 0,1 à 1,9, de préférence à 1,7
- **en ce qu'**au moins un partenaire redox (en % en poids sur la base des oxydes) est présent dans le verre en les quantités suivantes :
As 0,1 à 6,0, de préférence 0,25 à 3,0
Sb 0,1 à 6,0, de préférence 0,25 à 3,0
Sn 0,1 à < 1,9, de préférence 0,2 à 1,8
Ce 0,05 à 3,0, de préférence 0,1 à 2,0
Fe 0,1 à 2,0, de préférence 0,1 à 1,0
W 0,1 à 4,0, de préférence 0,1 à 3,0
Mn 0,05 à 3, de façon particulièrement préférée 0,1 à 2,0
- le générateur de colloïde métallique et le partenaire redox ne pouvant pas être identiques.

5. Vitrocéramique d'aluminosilicate selon la revendication 4, **caractérisée en ce qu'**elle contient les associations suivantes de générateurs de colloïdes métalliques avec des partenaires redox (en % en poids sur la base des oxydes) :
| | | | | |
|---|---|---|---|---|
| Sn | 0,1 - 1,8 | avec As | 0,25 - 3 | ou |
| Sn | 0,1 - 1,8 | avec Sb | 0,25 - 3 | ou |
| Bi | 0,1 - 4 | avec Sn | 0,1 - 1,8. | |

6. Vitrocéramique d'aluminosilicate transparente incolore selon la revendication 4 ou 5, **caractérisée en ce qu'**elle est transformable par un traitement thermique en une vitrocéramique colorée avec un colloïde métallique.
